# FASCICULE DE BREVET EUROPEEN

(11) **EP 2 917 559 B1**
(45) Date de publication et mention de la délivrance du brevet: **26.04.2017**
(21) Numéro de dépôt: 13805457.2
(22) Date de dépôt: 06.11.2013
(51) Int. Cl.: F02P 5/15, F02P 5/152

(54) **PROCÉDÉ DE COMMANDE D'UN MOTEUR A COMBUSTION INTERNE**
VERFAHREN ZUR STEUERUNG EINES VERBRENNUNGSMOTORS
METHOD FOR CONTROLLING AN INTERNAL COMBUSTION ENGINE

(30) Priorité: 09.11.2012 FR 1260649
(43) Date de publication de la demande: 16.09.2015
(73) Titulaire: Peugeot Citroën Automobiles SA, 78140 Vélizy Villacoublay (FR)
(72) Inventeur: WATTIGNIES, Rudy, F-28130 Maintenon (FR); GRALL, Sebastien, F-94000 Creteil (FR); PARODI, Julien, F-06600 Antibes (FR)
(86) Numéro de dépôt international: PCT/FR2013/052640
(87) Numéro de publication internationale: WO 2014/072632

(56) Documents cités:
- WO-A2-2008/065511
- DE-A1- 4 406 982
- FR-A1- 2 811 029
- FR-A1- 2 838 779

## Description

La présente invention revendique la priorité de la demande française 1260649 déposée le 9 novembre 2012 dont le contenu (texte, dessins et revendications) est ici incorporé par référence.

L'invention porte sur un procédé de commande d'un moteur à combustion interne équipant un véhicule automobile. Elle a pour objet un tel procédé.

Les documents FR 2.838.779 et FR 2.895.458 décrivent un procédé de gestion d'un moteur à combustion interne équipant un véhicule automobile. Selon le procédé de FR 2.895.458 et pour une action d'une fonction de stabilité de roulement, on diminue un couple de consigne par rapport à un couple demandé par un conducteur du véhicule automobile. Pour ce faire, au moins pendant une période de couple de consigne diminué, on applique un décalage à une charge d'air de consigne ou une grandeur correspondante de façon à ce que le couple réel fondé sur la charge d'air soit supérieur à un couple réel fondé sur un angle d'allumage.

Un tel procédé mérite d'être amélioré pour assurer un niveau élevé de prestations relatives respectivement à une consommation en carburant du moteur à combustion interne, à un agrément de conduite du véhicule automobile, à une performance du véhicule automobile et à une minimisation d'émission de polluants par le moteur thermique. De plus, il est souhaitable que le moteur à combustion interne respecte des critères de tenue mécanique et thermique sans pour autant altérer une sécurité du conducteur. Dans certaines conditions de vie du véhicule automobile, l'ensemble de ces contraintes ne peuvent être toutes respectées dans l'absolu en même temps. Il en découle une nécessité de priorisation de ces contraintes. Autrement dit, il est nécessaire de trouver un meilleur compromis possible parmi des lois de commande du contrôle du moteur à combustion interne. A titre d'exemple, dans une situation de vie dans laquelle le véhicule automobile requiert du moteur à combustion interne d'assurer un couple instantané faible, en cas d'une requête adressée par un électro-stabilisateur programmé, couramment dénommé ESP, et dans laquelle une ligne d'échappement équipant le moteur à combustion interne est en limite de tenue thermique, le contrôle moteur doit pouvoir dégrader les avances moteur pour se conformer à la demande de couple faible émise par l'électro-stabilisateur programmé, tout en assurant une tenue thermique satisfaisante de la ligne d'échappement.

La présente invention vient améliorer la situation en proposant un procédé offrant un compromis qui permet une gestion optimisée de telles contraintes, en préservant un agrément de conduite du véhicule automobile et sans altérer une combustion à l'intérieur du moteur à combustion interne.

Un but de la présente invention est de proposer un procédé de commande d'un moteur à combustion interne équipant un véhicule automobile, le procédé de commande offrant un meilleur compromis possible entre une préservation d'éléments équipant une ligne d'échappement dont est pourvu le moteur à combustion interne, une sécurité et un confort pour un utilisateur du véhicule automobile et un respect d'une consigne de couple-moteur adressé au moteur à combustion interne.

Un procédé de commande de la présente invention est un procédé de commande d'un moteur à combustion interne équipant un véhicule automobile. Le procédé de commande comprend une étape de transformation d'au moins une consigne de couple-moteur en une consigne d'avance à l'allumage. Le procédé de commande comprend une première étape de calcul d'une consigne minimale d'avance à l'allumage. Le procédé de commande comprend une étape de suppression de la consigne minimale d'avance à l'allumage.

Selon la présente invention. l'étape de suppression comprend une étape d'analyse d'un état thermique d'une ligne d'échappement équipant le moteur à combustion interne

L'étape de suppression comprend avantageusement une première étape de vérification si la consigne d'avance à l'allumage est inférieure à la consigne minimale d'avance à l'allumage.

L'étape de suppression comprend avantageusement une étape de comparaison d'un nombre d'occurrence d'endommagements thermiques affectant des éléments équipant la ligne d'échappement avec un nombre maximum d'occurrences admissibles.

L'étape de suppression comprend avantageusement une deuxième étape de vérification si une température limite maximale de gaz d'échappement est dépassée.

L'étape de suppression comprend avantageusement au moins une étape de contrôle si une condition de sécurité d'un utilisateur est assurée par un électro-stabilisateur programmé.

L'étape de suppression comprend avantageusement au moins une étape de non prise en compte de la consigne minimale d'avance à l'allumage.

L'étape de suppression comprend avantageusement au moins une étape de maintien de la consigne minimale d'avance à l'allumage.

Un moteur à combustion interne de la présente invention qui équipe un véhicule automobile est principalement reconnaissable en ce que le moteur à combustion interne est pourvu d'une installation de commande apte à mettre en oeuvre un tel procédé de commande.

Un véhicule automobile de la présente invention est principalement reconnaissable en ce que le véhicule automobile est équipé d'un tel moteur à combustion interne.

D'autres caractéristiques et avantages de la présente invention apparaîtront à la lecture de la description qui va en être faite d'exemples de réalisation, en relation avec les figures des planches annexées, dans lesquelles :
- La figure 1 est une vue schématique d'un procédé de commande d'un moteur à combustion interne selon la présente invention.
- La figure 2 est une vue schématique d'une étape du procédé de commande illustré sur la figure précédente.

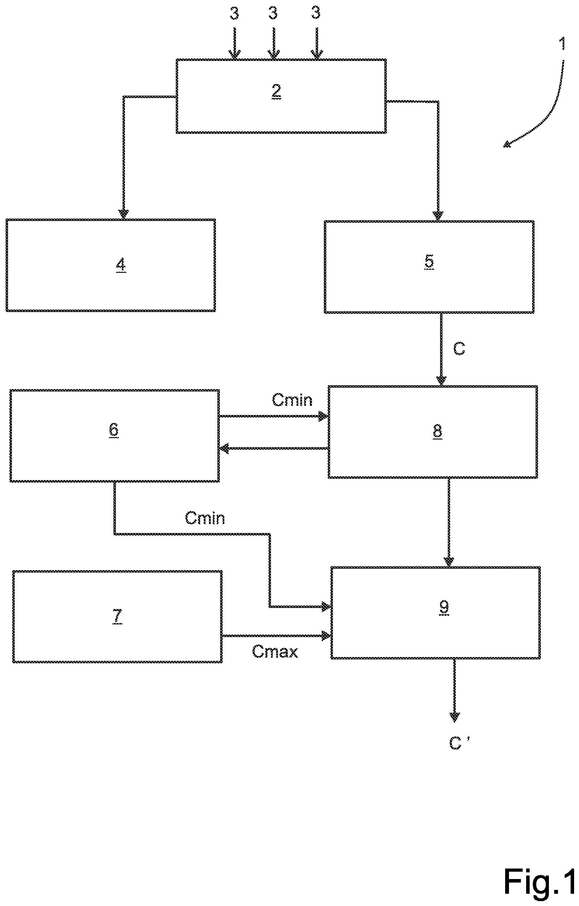

Sur la figure 1, est représenté un procédé de commande 1 de la présente invention. Le procédé de commande 1 est un procédé de commande d'un moteur à combustion interne équipant un véhicule automobile. Le procédé de commande est mis en oeuvre par l'intermédiaire d'une installation de commande qui équipe le moteur à combustion interne. Le moteur à combustion interne est équipé d'une ligne d'échappement pour évacuer vers un environnement extérieur des gaz d'échappement produits par le moteur à combustion interne. La ligne d'échappement est pourvue d'éléments, tels qu'un catalyseur, un filtre ou analogue, pour éliminer ou retenir des impuretés préalablement à leur rejet vers l'environnement extérieur.

Le procédé de commande 1 comprend une étape d'acquisition 2 de consignes d'un couple-moteur 3 à délivrer par le moteur à combustion interne. Les consignes de couple-moteur 3 sont multiples et d'origine diverses. Parmi les consignes de couple-moteur 3, on peut citer une consigne de couple-moteur 3 en provenance d'un conducteur du véhicule automobile, une consigne de couple-moteur 3 en provenance d'un régulateur de vitesse du véhicule automobile, une consigne de couple-moteur 3 en provenance d'une boîte de vitesse équipant le véhicule automobile, une consigne de couple-moteur 3 en provenance d'un électro-stabilisateur programmé, couramment dénommé ESP, ainsi que d'autres consignes analogues. L'électro-stabilisateur programmé, aussi appelé correcteur électronique de trajectoire, est un équipement de sécurité active d'anti-dérapage du véhicule automobile, qui est apte à améliorer un contrôle d'une trajectoire du véhicule automobile.

Selon une approche de l'art antérieur, notamment telle que l'approche décrite par le document FR 2.895.458, il est connu, pour modifier un couple-moteur délivré par le moteur à combustion interne, d'agir sur une arrivée d'air 4 à l'intérieur du moteur à combustion interne, par exemple par l'intermédiaire d'un volet papillon équipant une telle arrivée d'air. Une telle approche présente l'inconvénient d'être une approche lente avec une réactivité de l'ordre de plusieurs centaines de millisecondes.

Selon l'approche de la présente invention, le procédé de commande 1 comprend une étape de transformation 5 desdites consignes de couple-moteur 3 en une consigne d'avance à l'allumage C. Une telle approche présente l'avantage d'être une approche rapide qui est directement liée à un temps moteur, qui est par exemple de l'ordre du temps nécessaire à un piston équipant un cylindre du moteur à combustion interne pour parcourir un demi-cycle de piston.

Le procédé de commande 1 comprend une première étape de calcul 6 d'une consigne minimale d'avance à l'allumage Cₘᵢₙ ainsi qu'une deuxième étape de calcul 7 d'une consigne maximale d'avance à l'allumage Cₘₐₓ. La consigne minimale d'avance à l'allumage Cₘᵢₙ et la consigne maximale d'avance à l'allumage Cₘₐₓ constituent respectivement une borne minimale et une borne maximale de la consigne d'avance à l'allumage C. Autrement dit, la consigne d'avance à l'allumage C est comprise à l'intérieur d'une plage de consignes qui est bornée par la consigne minimale d'avance à l'allumage Cₘᵢₙ et la consigne maximale d'avance à l'allumage Cₘₐₓ.

Selon la présente invention, le procédé de commande 1 comprend avantageusement une étape de suppression 8 de la consigne minimale d'avance à l'allumage Cₘᵢₙ pour permettre de retenir une consigne d'avance à l'allumage C qui est inférieure à la consigne minimale d'avance à l'allumage Cₘᵢₙ afin d'éviter une saturation des consignes minimales d'avance à l'allumage Cₘᵢₙ. Autrement dit, la présente invention propose dans certains cas de s'affranchir du respect de la consigne minimale d'avance à l'allumage Cₘᵢₙ, de telle sorte qu'une consigne d'avance à l'allumage appliquée C' soit éventuellement inférieure à la consigne minimale d'avance à l'allumage Cₘᵢₙ. Ces dispositions permettent avantageusement de respecter une consigne d'avance à l'allumage C qui est relative à la consigne de couple-moteur prioritaire parmi l'ensemble des consignes de couple-moteur C.

Le procédé de commande 1 comprend ensuite une étape de coordination 9 de la consigne d'avance à l'allumage C qui permet de déterminer la consigne d'avance à allumage appliquée C'.

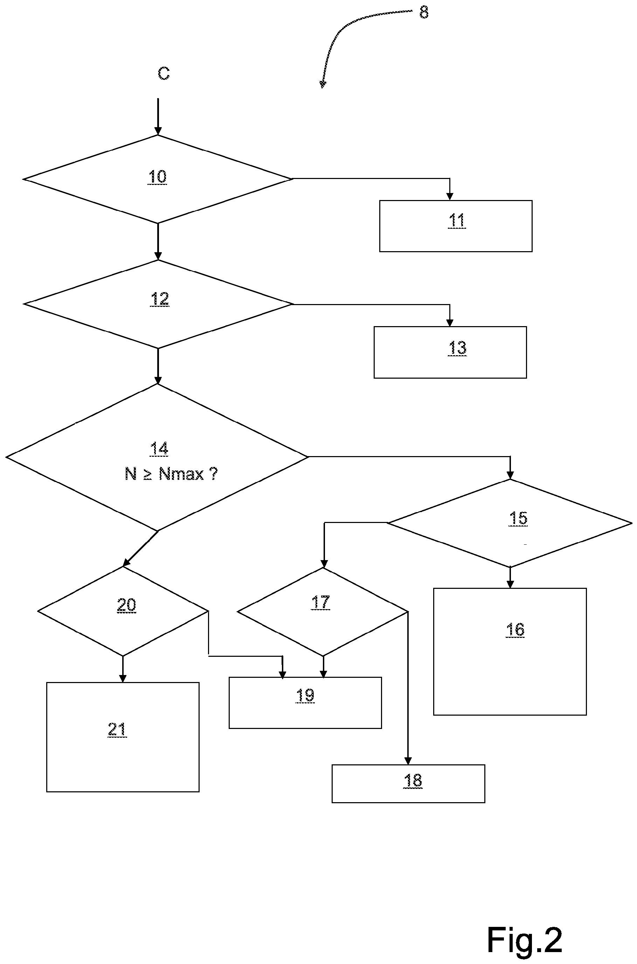

Sur la figure 2, l'étape de suppression 8 de la consigne minimale d'avance à l'allumage comprend une première étape de vérification 10 si la consigne d'avance à l'allumage C est inférieure à la consigne minimale d'avance à l'allumage Cₘᵢₙ. Si la réponse est négative, l'étape de suppression 8 comprend une étape de mise en oeuvre 11 de la consigne d'avance à l'allumage C. Si la réponse est positive, l'étape de suppression 8 comprend une étape d'analyse 12 d'un état thermique de la ligne d'échappement équipant le moteur à combustion interne. L'étape d'analyse 12 consiste à vérifier si au moins un des éléments équipant la ligne d'échappement a atteint un seuil de température qui est néfaste à sa pérennité. Si la réponse est négative, l'étape de suppression 8 comprend une première étape de non prise en compte 13 de la consigne minimale d'avance à l'allumage Cₘᵢₙ. Autrement dit, la consigne d'avance à l'allumage C est retenue nonobstant la consigne minimale d'avance à l'allumage Cₘᵢₙ. Si la réponse est positive, l'étape de suppression 8 comprend une étape de comparaison 14 d'un nombre d'occurrence N d'endommagements thermiques affectant les éléments équipant la ligne d'échappement avec un nombre maximum Nₘₐₓ d'occurrences admissibles.

Si le nombre d'occurrence N est supérieur ou égal au nombre maximum Nₘₐₓ, l'étape de suppression 8 comprend une deuxième étape de vérification 15 si une température limite maximale des gaz d'échappement est dépassée. Si la réponse est négative, l'étape de suppression 8 comprend une deuxième étape de non prise en compte 16 de la consigne minimale d'avance à l'allumage Cₘᵢₙ. Autrement dit, la consigne d'avance à l'allumage C est retenue nonobstant la consigne minimale d'avance à l'allumage Cₘᵢₙ. La deuxième étape de non prise en compte 16 comprend également une étape d'incrémentation du nombre d'occurrence N. Si la réponse est positive, l'étape de suppression comprend 8 comprend une première étape de contrôle 17 si une condition de sécurité d'un utilisateur du véhicule automobile est assurée par un électro-stabilisateur programmé. Si la réponse est négative, l'étape de suppression 8 comprend une première étape de maintien 18 de la consigne minimale d'avance à l'allumage Cₘᵢₙ. Si la réponse est positive, l'étape de suppression 8 comprend une troisième étape de non prise en compte 19 de la consigne minimale d'avance à l'allumage Cₘᵢₙ. Autrement dit, la consigne d'avance à l'allumage C est retenue nonobstant la consigne minimale d'avance à l'allumage Cₘᵢₙ.

Si le nombre d'occurrence N est inférieur au nombre maximum Nₘₐₓ, l'étape de suppression 8 comprend une deuxième étape de contrôle 20 si une condition de sécurité de l'utilisateur du véhicule automobile est assurée par l'électro-stabilisateur programmé. Si la réponse est positive, l'étape de suppression 8 comprend la troisième étape de non prise en compte 19 de la consigne minimale d'avance à l'allumage Cₘᵢₙ. Autrement dit, la consigne d'avance à l'allumage C est retenue nonobstant la consigne minimale d'avance à l'allumage Cₘᵢₙ. Si la réponse est négative, l'étape de suppression 8 comprend une deuxième étape de maintien 21 de la consigne minimale d'avance à l'allumage C_{min.} La deuxième étape de maintien 21 comprend également une étape d'incrémentation du nombre d'occurrence N.

Ces dispositions sont telles que le procédé de commande 1 optimise une protection thermique des éléments contenues à l'intérieur de la ligne d'échappement.

Plus particulièrement, la mise en place d'un compteur d'occurrence d'endommagements thermiques temporels permet de ne pas se limiter au dépassement ponctuel d'un seuil de température *stricto sensu,* mais de prendre en compte une notion d'inertie thermique de matériaux constitutifs des éléments. En effet, les calculs de dimensionnement thermique de pièces mécaniques se font en cas critiques mais principalement en situation thermique stabilisé.

Plus particulièrement encore, la sécurisation de la protection thermique de la ligne d'échappement et des éléments que cette dernière comporte est confortée par la prise en compte d'un seuil de température maximum à ne pas dépasser. Ce seuil de température maximum garantit une tenue thermique optimisée de la ligne d'échappement.

## Revendications

1. Procédé de commande (1) d'un moteur à combustion interne équipant un véhicule automobile, le procédé de commande (1) comprenant une étape de transformation (5) d'au moins une consigne de couple-moteur (3) en une consigne d'avance à l'allumage (C), le procédé de commande (1) comprenant une première étape de calcul (6) d'une consigne minimale d'avance à l'allumage (Cₘᵢₙ), une étape de suppression (8) de la consigne minimale d'avance à l'allumage (Cₘᵢₙ), **caractérisé en ce que** cette étape de suppression (8) comprend une étape d'analyse (12) d'un état thermique d'une ligne d'échappement équipant le moteur à combustion interne.

2. Procédé de commande (1) selon la revendication précédente, **caractérisé en ce que** l'étape de suppression (8) comprend une première étape de vérification (10) si la consigne d'avance à l'allumage (C) est inférieure à la consigne minimale d'avance à l'allumage (Cₘᵢₙ).

3. Procédé de commande (1) selon l'une quelconque des revendications précédentes, **caractérisé en ce que** l'étape de suppression (8) comprend une étape de comparaison (14) d'un nombre d'occurrence (N) d'endommagements thermiques affectant des éléments équipant la ligne d'échappement avec un nombre maximum (Nₘₐₓ) d'occurrences admissibles.

4. Procédé de commande (1) selon l'une quelconque des revendications précédentes, **caractérisé en ce que** l'étape de suppression (8) comprend une deuxième étape de vérification (15) si une température limite maximale de gaz d'échappement est dépassée.

5. Procédé de commande (1) selon l'une quelconque des revendications précédentes, **caractérisé en ce que** l'étape de suppression (8) comprend au moins une étape de contrôle (17,20) si une condition de sécurité d'un utilisateur est assurée par un électro-stabilisateur programmé.

6. Procédé de commande (1) selon l'une quelconque des revendications précédentes, **caractérisé en ce que** l'étape de suppression (8) comprend au moins une étape de non prise en compte (13,16,19) de la consigne minimale d'avance à l'allumage (Cₘᵢₙ).

7. Procédé de commande (1) selon l'une quelconque des revendications 1 à 6, **caractérisé en ce que** l'étape de suppression (8) comprend au moins une étape de maintien (18,21) de la consigne minimale d'avance à l'allumage (Cₘᵢₙ).

8. Moteur à combustion interne équipant un véhicule automobile, **caractérisé en ce que** le moteur à combustion interne est pourvu d'une installation de commande apte à mettre en oeuvre un procédé de commande selon l'une quelconque des revendications 1 à 7.

9. Véhicule automobile pourvu d'un moteur à combustion interne selon la revendication 8.

## Patentansprüche

1. Steuerverfahren (1) eines Verbrennungsmotors, der ein Kraftfahrzeug ausstattet, wobei das Steuerverfahren (1) einen Schritt des Umformens (5) mindestens eines Motordrehmomentsollwerts (3) in einen Zündvorlaufsollwert (C) umfasst, wobei das Steuerverfahren (1) einen ersten Berechnungsschritt (6) eines Zündmindestvorlauf-Sollwerts (Cₘᵢₙ), einen Schritt des Löschens (8) des Zündmindestvorlauf-Sollwerts (Cₘᵢₙ) umfasst, **dadurch gekennzeichnet, dass** dieser Löschschritt (8) einen Analyseschritt (12) eines Wärmezustands einer Abgasleitung, die den Verbrennungsmotor ausstattet, umfasst.

2. Steuerverfahren (1) nach dem vorhergehenden Anspruch, **dadurch gekennzeichnet, dass** der Löschschritt (8) einen ersten Schritt des Prüfens (10), ob der Zündvorlaufsollwert (C) niedriger ist als der Zündmindestvorlauf-Sollwert (Cₘᵢₙ), umfasst.

3. Steuerverfahren (1) nach einem der vorhergehenden Ansprüche, **dadurch gekennzeichnet, dass** der Löschschritt (8) einen Schritt des Vergleichens (14) einer Anzahl (N) von Wärmebeschädigungsereignissen, die Elemente, die die Abgasleitung beeinträchtigen, mit einer maximalen Anzahl (Nₘₐₓ) zulässiger Ereignisse umfasst.

4. Steuerverfahren (1) nach einem der vorhergehenden Ansprüche, **dadurch gekennzeichnet, dass** der Löschschritt (8) einen zweiten Schritt des Prüfens (15), ob eine maximale Abgasgrenztemperatur überschritten wird, umfasst.

5. Steuerverfahren (1) nach einem der vorhergehenden Ansprüche, **dadurch gekennzeichnet, dass** der Löschschritt (8) mindestens einen Schritt des Prüfens (17, 20), ob eine Sicherheitsbedingung eines Benutzers durch einen programmierten Elektrostabilisator sichergestellt ist, umfasst.

6. Steuerverfahren (1) nach einem der vorhergehenden Ansprüche, **dadurch gekennzeichnet, dass** der Löschschritt (8) mindestens einen Schritt der Nichtberücksichtigung (13, 16, 19) des Zündmindestvorlauf-Sollwerts (Cₘᵢₙ) umfasst.

7. Steuerverfahren (1) nach einem der Ansprüche 1 bis 6, **dadurch gekennzeichnet, dass** der Löschschritt (8) mindestens einen Schritt des Erhaltens (18, 21) des Zündmindestvorlauf-Sollwerts (Cₘᵢₙ) umfasst.

8. Verbrennungsmotor, der ein Kraftfahrzeug ausstattet, **dadurch gekennzeichnet, dass** der Verbrennungsmotor mit einer Steueranlage versehen ist, die in der Lage ist, ein Steuerverfahren nach einem der Ansprüche 1 bis 7 umzusetzen.

9. Kraftfahrzeug, das mit einem Verbrennungsmotor nach Anspruch 8 versehen ist.

## Claims

1. A method (1) for controlling an internal combustion engine equipping a motor vehicle, the control method (1) including a step (5) of converting at least one engine torque setpoint (3) into an ignition advance setpoint (C), the control method (1) including a first calculation step (6) of a minimum ignition advance setpoint (Cₘᵢₙ), a suppression step (8) of the minimum ignition advance setpoint (Cₘᵢₙ), **characterized in that** this suppression step (8) includes an analysis step (12) of a thermal state of an exhaust line equipping the internal combustion engine.

2. The control method (1) according to the preceding claim, **characterized in that** the suppression step (8) includes a first step (10) of verification if the ignition advance setpoint (C) is less than the minimum ignition advance setpoint (Cₘᵢₙ).

3. The control method (1) according to any one of the preceding claims, **characterized in that** the suppression step (8) includes a comparison step (14) of an occurrence number (N) of thermal damages affecting elements equipping the exhaust line with a maximum number (Nₘₐₓ) of admissible occurrences.

4. The control method (1) according to any one of the preceding claims, **characterized in that** the suppression step (8) includes a second step of verification (15) if a maximum limit temperature of exhaust gas is exceeded.

5. The control method (1) according to any one of the preceding claims, **characterized in that** the suppression step (8) includes at least one monitoring step (17, 20) if a safety condition of a user is ensured by programmed electro-stabilizer.

6. The control method (1) according to any one of the preceding claims, **characterized in that** the suppression step (8) includes at least one step (13, 16, 19) of not taking into account the minimum ignition advance setpoint (Cₘᵢₙ).

7. The control method (1) according to any one of Claims 1 to 6, **characterized in that** the suppression step (8) includes at least one step (18, 21) of maintaining the minimum ignition advance setpoint (Cₘᵢₙ).

8. An internal combustion engine equipping a motor vehicle, **characterized in that** the internal combustion engine is provided with a control installation able to implement a control method according to any one of Claims 1 to 7.

9. A motor vehicle provided with an internal combustion engine according to Claim 8.
